Europäisches Patentamt

European Patent Office

Office européen des brevets

(11) Veröffentlichungsnummer: **0 228 627**

**A1**

## EUROPÄISCHE PATENTANMELDUNG

(21) Anmeldenummer: **86117182.5**

(22) Anmeldetag: **10.12.86**

(51) Int. Cl.⁴: **B 60 D 1/04**

(30) Priorität: **16.12.85 US 809592**

(43) Veröffentlichungstag der Anmeldung:
**15.07.87 Patentblatt 87/29**

(84) Benannte Vertragsstaaten:
**AT BE CH DE ES FR GB IT LI SE**

(71) Anmelder: **DEERE & COMPANY**
**1 John Deere Road**
**Moline Illinois 61265(US)**

(72) Erfinder: **Allen, James Robert**
**R.R. 2, Box 34**
**Valley Mills Texas 76689(US)**

(72) Erfinder: **Wohlford, William Paul**
**5102 Crow Creek Road**
**Bettendorf Iowa 52722(US)**

(72) Erfinder: **Poore, Bernard Brandt**
**722 - 51st Avenue**
**East Moline Illinois 61244(US)**

(74) Vertreter: **Feldmann, Bernhard**
**DEERE & COMPANY European Office, Patent Department**
**Steubenstrasse 36-42 Postfach 503**
**D-6800 Mannheim 1(DE)**

(54) Anhängevorrichtung.

㉗ Anhängevorrichtung zum Verbinden eines hakenförmig
ausgebildeten Anschlußgliedes (40) eines Gerätes mit einer
an einem ziehenden Fahrzeug vorgesehenen Querstange
(16), wobei das Anschlußglied (40) über ein am ziehenden
Fahrzeug angeordnetes Verriegelungsglied (26) sicherbar
und das Verriegelungsglied (26) an der Querstange (16) angeordnet ist, zusammen mit der Querstange (16) eine Ausnehmung zur Aufnahme des Anschlußgliedes (40) bildet und
aus einer Aufnahmestellung in eine Verriegelungsstellung
drehbar ist.

FIG. 5

EP 0 228 627 A1

Croydon Printing Company Ltd.

## Anhängevorrichtung

Die Erfindung bezieht sich auf eine Anhängevorrichtung zum Verbinden eines hakenförmig ausgebildeten Anschlußgliedes, eines Gerätes mit einer an einem ziehenden Fahrzeug vorgesehen Querstange, wobei das Anschlußglied über ein am ziehenden Fahrzeug angeordnetes Verriegelungsglied sicherbar ist.

Bei der Anhängevorrichtung, von der die Erfindung ausgeht (US-A-3 524 660), ist das hakenförmige Anschlußglied auf einer Deichsel derart angeordnet, daß die Hakenöffnung nach rückwärts offen ist und von einem Schwenkbügel am ziehenden Fahrzeug erfaßt werden kann, wenn die Deichsel auf den Boden abgesenkt ist. Der Schwenkbügel ist dabei auf einer Traverse vertikal schwenkbar angeordnet, die auf einem an der Querstange befestigten Längsträger aufgeschraubt ist. Zum Anschließen muß das ziehende Fahrzeug soweit zurückgesetzt werden, daß der Schwenkbügel hinter der Hakenöffnung zu liegen kommt. Danach werden entsprechende Sicherungselemente gelöst, worauf der Schwenkbügel infolge seines Eigengewichtes auf die Deichsel fällt. Durch Anfahren mit dem ziehenden Fahrzeug soll der Schwenkbügel in die Hakenöffnung eingreifen und wird bei weiterem Vorwärtsfahren zusammen mit der Deichsel in eine Horizontallage gezogen, in der dann das Anschlußglied vor einem Verriegelungsglied zu liegen kommt, das an dem Längsträger angreift. Diese Anhängevorrichtung ermöglicht es im Prinzip, ein Gerät mit einem ziehenden Fahrzeug zu verbinden, ohne daß eine Hilfsperson erforderlich wäre, oder daß der Fahrer den Fahrerstand verlassen müßte. Sie ist aber in ihrem Aufbau äußerst aufwendig und weißt infolge der vielen Anlenkstellen einen ungünstigen Kraftverlauf auf. Hinzu kommt, daß das geräteseitige Anschlußstück in der abgesenkten Position der Deichsel nicht gesichert werden kann, wodurch Unfallgefahren verbunden mit

EUROPEAN OFFICE

einem unsachgemäßen Anschluß entstehen können.

Die mit der Erfindung zu lösende Aufgabe wird darin gesehen, eine einfache, unfallsichere und einen günstigen Kräfteverlauf aufweisende Anhängevorrichtung zu schaffen.

Diese Aufgabe ist gemäß der Erfindung dadurch gelöst worden, daß das Verriegelungsglied an der Querstange angeordnet ist, zusammen mit der Querstange eine Ausnehmung zur Aufnahme des Anschlußgliedes bildet, und aus einer Aufnahmestellung in eine Verriegelungsstellung drehbar ist, so daß sich im Ganzen gesehen eine äußerst einfache Anhängung eines Gerätes ergibt, die gegebenenfalls vom Fahrerstand aus zu bewerkstelligen ist, wobei eine Sicherung bereits in der Aufnahmestellung erfolgt und die Kräfte sofort in die Querstange eingeleitet werden.

Im Rahmen der Erfindung kann das Verriegelungsglied auf der Querstange drehbar gelagert sein, doch wird nach der Erfindung vorgeschlagen, daß das Verriegelungsglied mit der Querstange fest verbunden und die Querstange um ihre Längsachse drehbar gelagert ist, wodurch sich eine besonders störunanfällige und einfache Anhängevorrichtung ergibt.

Gleichfalls liegt es im Rahmen der Erfindung, daß das hakenförmige Anschlußglied nach vorne oder wie beim Stand der Technik nach rückwärts öffnet. Doch ergibt sich, wenn das hakenförmige Anschlußglied derart angeordnet ist, daß seine Hakenausnehmung nach vorne offen ist, eine bessere Anschlußmöglichkeit, bzw. ein besseres Einfädeln des Anschlußgliedes, wobei das ziehende Fahrzeug nicht so weit zurückgefahren zu werden braucht. Durch eine Höhenverstellung der Querstange läßt sich der Anhängevorgang vom Fahrerstand aus durch eine einzige Bedienungsperson in einfacher Weise vollziehen. Hierbei kann die Querstange vertikal, beispielsweise durch Hubzylinder, aus einer unteren Aufnahmeposition in eine Transportstellung verstellt werden. Besonders einfach ist es aber, wenn die an einem ziehenden Fahrzeug, wie beispielsweise an einem Ackerschlepper, sowieso vorhandenen unteren Lenker zur Höhenverstellung verwendet werden, weshalb nach der Erfindung ferner vorgeschlagen wird, daß die Querstange als Rundstange ausgebildet ist, die in den rückwärtigen Enden von am ziehenden Fahrzeug vorgesehenen unteren Lenkern drehbar gelagert ist.

Die gattungsmäßig berücksichtigte Anhängevorrichtung zeigt bereits, daß das Anschlußglied etwa U- oder C-förmig ausgebildet und ein Schenkel mit einer Zugstange fest verbunden ist, der mit dem anderen freien Schenkel über ein Stegteil in Verbindung steht. Für ein solches Anschlußglied kann eine einfache Aufnahme und sichere Verriegelung dann erfindungsgemäß erreicht werden, wenn die von der Querstange und dem Verriegelungsglied gebildete Ausnehmung derart ausgebildet ist, daß in der Aufnahmestellung der freie Schenkel des Anschlußgliedes durch die Ausnehmung führbar und daß in der Verriegelungsstellung der Stegteil des Anschlußgliedes vom Verriegelungsglied und Querstange umfaßt ist, derart, daß eine Bewegung des Anschlußgliedes nach vorne oder rückwärts verhindert ist. Zweckmäßig ist hierzu das Verriegelungsglied halbkreisförmig und im Querschnitt kreis- oder etwa kreisförmig ausgebildet.

Um ein unbeabsichtigtes Verdrehen des Verriegelungsgliedes bzw. der Querstange zu verhindern, kann nach der Erfindung ferner vorgesehen sein, daß das Verriegelungsglied bzw. die Querstange in der Verriegelungsstellung über eine Feststellvorrichtung sicherbar ist, wobei es unter Umständen auch zweckmäßig sein kann, in der Aufnahmestellung eine entsprechende Verriegelung vorzusehen.

Im wesentlichen kann diese Feststellvorrichtung eine Buchse aufweisen, die auf der Rundstange drehbar und axial verschiebbar und in der Verriegelungsstellung gegen Drehung auf der Rundstange und mit der Rundstange des Verriegelungsgliedes feststellbar ist. Zum einfachen Feststellen der verschiebbaren Buchse auf der Rundstange kann nach der Erfindung vorgesehen sein, daß auf der Rundstange eine weitere Buchse drehfest angeordnet ist, die mit der auf der Rundstange verschiebbar angeordneten Buchse über Zähne in Eingriff bringbar ist, wobei an der verschiebbaren Buchse eine Nockenplatte mit einer Nockenfläche angelenkt ist, die gegen einen Radialflansch an der Rundstange anliegt und über die die Buchsen gegen die Wirkung einer Feder außer Eingriff bringbar sind, wobei die Nockenplatte einen Ausleger aufweist, der mit einem unteren Lenker derart zur Anlage bringbar ist, daß die verschiebbare Buchse gegen Drehung gesichert ist. Dies wird zweckmäßig dadurch erreicht, daß die Nockenplatte mit einem Betätigungshebel versehen ist und der Ausleger einen oberen und einen unteren Schenkel aufweist, die den unteren Lenker über- bzw. untergreifen. Damit kann bei Betätigung des Betätigungshebels der Ausleger soweit verschwenkt werden, daß er den entsprechenden unteren Lenker nicht mehr übergreift, wobei aber noch die Zähne der beiden Buchsen miteinander in Eingriff sind, obwohl bereits eine Verschiebung der verschieblichen Buchse stattgefunden hat. Solange die Zähne aber noch gegeneinander anliegen, kann dann über den Betätigungshebel die Rundstange gedreht werden, so daß das Verriegelungsglied aus seiner Aufnahmestellung in die Verriegelungsstellung gelangt. Danach wird über den Betätigungshebel die verschiebbare Buchse noch weiter verschoben, so daß die Zähne außer Eingriff kommen, und die verschiebbare Buchse zurückgedreht, worauf sie dann wieder aufgrund der Federwirkung in die Zähne der weiteren Buchse eingreift und der Ausleger mit seinem oberen und seinem unteren Schenkel den entsprechenden unteren Lenker wieder erfaßt. Durch das Anliegen der Nockenfläche an den Radialflansch kann die Federkraft in einfacher Weise überwunden werden.

In der Zeichnung ist ein nachfolgend näher erläutertes
Ausführungsbeispiel der Erfindung dargestellt, es zeigt:

Fig. 1    einen Ackerschlepper in rückwärtiger
          Ansicht mit an die Dreipunktgerätekupplung angebauter Querstange und
          Verriegelungsglied,

Fig. 2    die Querstange mit Verriegelungsglied,

Fig. 3    ein hakenförmiges Anschlußglied,

Fig. 4    eine perspektivische Darstellung der
          Anhängevorrichtung, wobei sich das
          Verriegelungsglied in der Aufnahmeposition befindet, in der der eine
          Schenkel des hakenförmigen Anschlußgliedes durch die von Querstange und
          Verriegelungsglied gebildete Öffnung
          geführt ist,

Fig. 5    eine ähnliche Darstellung wie in Fig. 4,
          jedoch das Verriegelungsglied in seiner Verriegelungsstellung darstellend,

Fig. 6    eine Feststellvorrichtung in einer
          Stellung, in der die Querstange gegen
          Drehen arretiert ist,

Fig. 7     eine ähnliche Darstellung wie in Fig. 6,
           wobei jedoch die Feststellvorrichtung
           sich in einer Position befindet, in der
           ein Drehen der Querstange möglich ist,

Fig. 8     ein Schnitt nach der Linie 8-8 in Fig. 6,

Fig. 9     ein Schnitt nach der Linie 9-9 in Fig. 7

Fig. 10    die Eingriffsfunktion von auf der Querstange angeordneten Buchsen und

Fig. 11    eine die Querstange gegenüber einem unteren Lenker festlegenden Ausleger mit
           einem Betätigungshebel.

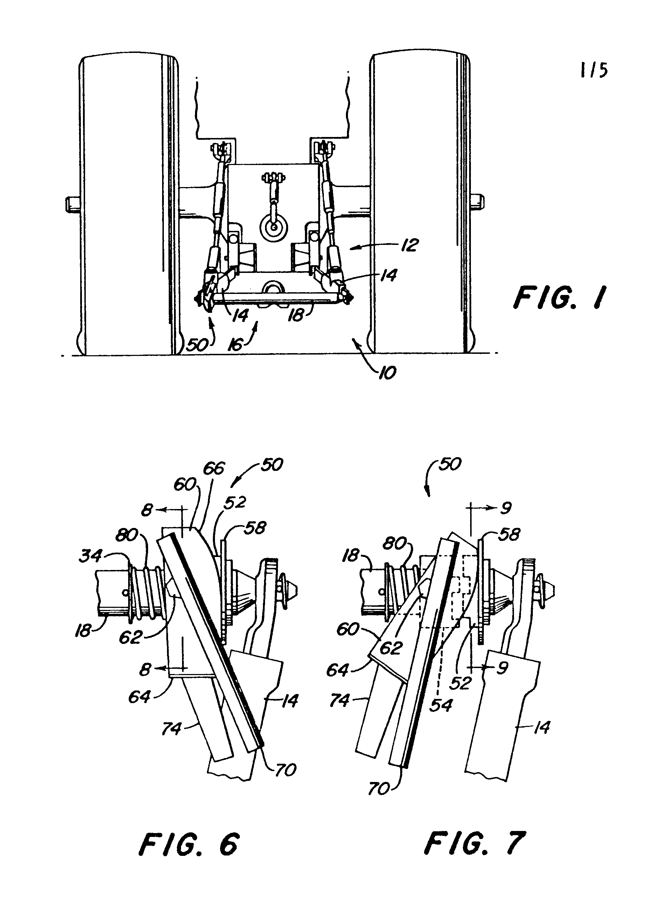

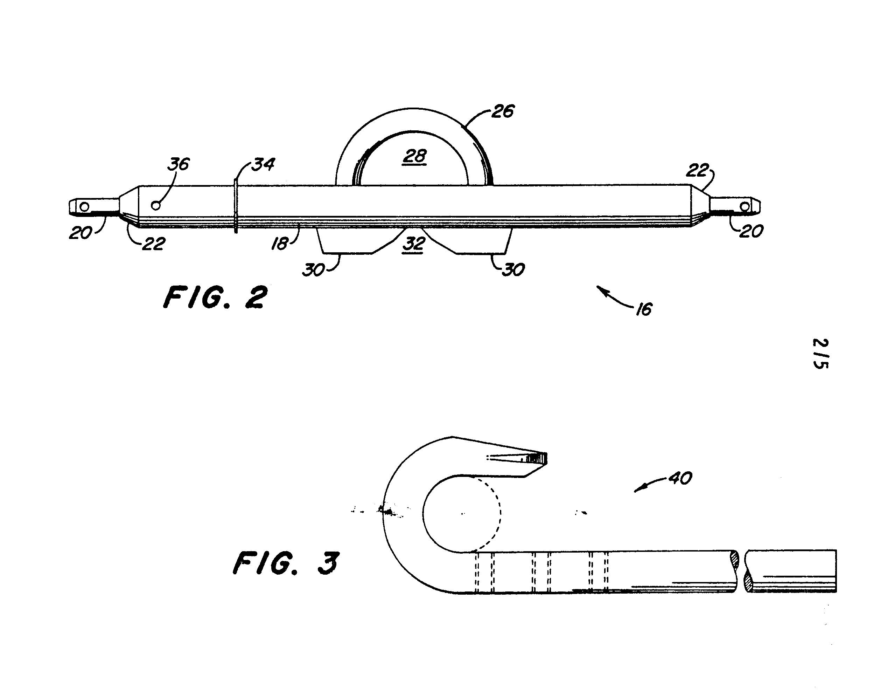

In Fig. 1 ist der rückwärtige Teil eines herkömmlichen Ackerschleppers 10 mit einer konventionellen Dreipunktgerätekupplung 12 dargestellt, die zwei sich nach rückwärts erstreckende untere Lenker 14 aufweist. Diese nehmen an
ihren rückwärtigen Enden eine Querstange 16 drehbar auf.
Diese Querstange 16, die, wenn die erfindungsgemäße Anhängevorrichtung nicht benutzt wird, einfach durch eine herkömmliche Anhängeschiene ersetzt werden kann, ist im einzelnen
in Fig. 2 dargestellt und besteht im wesentlichen aus einer
Rundstange 18 mit Endabschnitten 20, die im Vergleich zu der
übrigen Rundstange 18 einen kleineren Durchmesser aufweisen
und als Lagerzapfen zum Anschluß an die unteren Lenkern
dienen, wobei Konusteile 22 die Abschnitte 20 mit der Rundstange 18 verbinden. Die Abschnitte 20 sind drehbar in entsprechenden Bohrungen in den Enden der unteren Lenker 14 gelagert und werden durch der Einfachheit halber in der Zeichnung nicht dargestellte Stifte gesichert. Etwa mittig auf
der Rundstange 18 ist ein Verriegelungsglied 26 in Form eines gebogenen Rundeisens fest angeordnet und bildet mit der
Querstange 16 eine Ausnehmung 28. Dem Verriegelungsglied 26 gegenüberliegend sind an der Unterseite der Querstange 16 noch zwei Führungsteile 30 angeordnet, die radial von der Querstange 16 abstehen und zwischen sich einen Führungsschlitz 32 bilden. Ferner ist noch auf der Rundstange 18 im Bereich ihres einen Endes ein Ring 34 vorgesehen und eine Bohrung 36, die die Rundstange 18 ganz durchdringt, ist zwischen dem Ring 34 und dem zugehörigen Ende in die Rundstangen eingearbeitet.

Ein geräteseitiges Anschlußglied 40 in Form eines Hakens ist aus den Fig. 3 bis 5 erkennbar und weist einen Schenkel oder eine Basis auf, die mit der Oberfläche einer Deichsel 42 eines in der Zeichnung nicht dargestellten Gerätes verschraubt werden kann, und zwar derart, daß die Hakenöffnung nach vorne, d.h. in Richtung auf die unteren Lenker 14 hin offen ist, so daß die Spitze des anderen Schenkels bzw. die Hakenspitze durch die Ausnehmung 28 durchtreten kann.

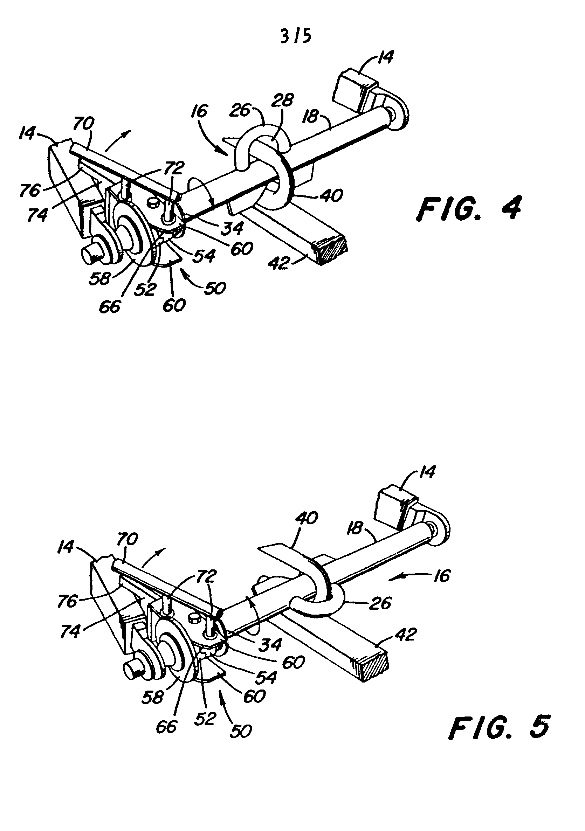

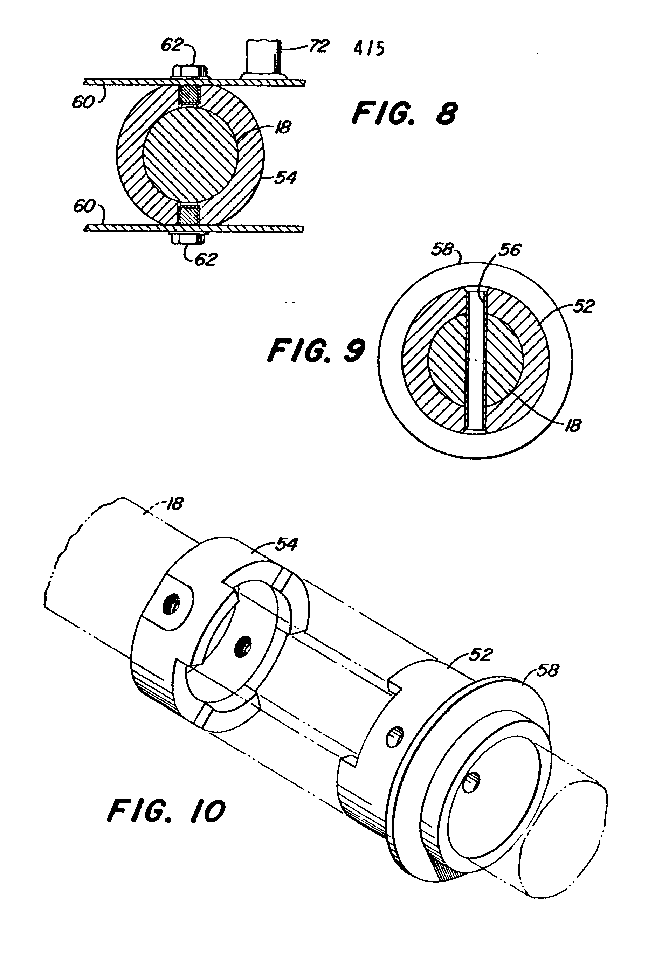

Zum Feststellen des Verriegelungsgliedes in den Stellungen nach Fig. 4 und Fig. 5 dient eine Feststellvorrichtung 50, die zwei auf die Rundstange 18 aufschiebbare zylindrische Buchsen 52 und 54 aufweist, die miteinander verrasten können und hierzu axial vorstehende Zähne aufweisen. Dies kann am besten aus Fig. 10 ersehen werden. Eine der Buchsen, und zwar die Buchse 52, ist auf der Rundstange 18 drehfest angeordnet, während die andere Buchse 54 auf der Rundstange drehbar ist. Die drehfeste Anordnung der Buchse 52 ist aus Fig. 9 zu ersehen und erfolgt über einen Paßstift 56. Ferner geht aus Fig. 9 und 10 noch hervor, daß die drehfest angeordnete Buchse 52 mit einem Radialflansch 58 versehen ist, auf dessen Funktion später noch zurückzukommen ist.

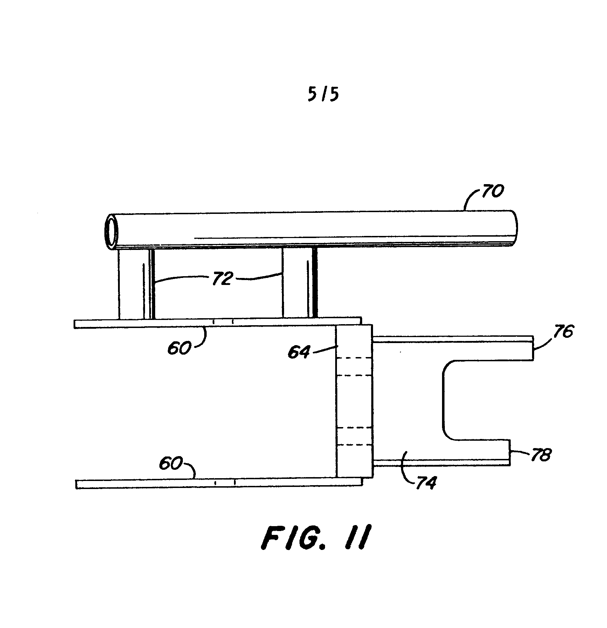

Die Buchse 54 ist nicht nur drehbar auf der Rundstange 18 sondern auch auf dieser axial verschiebbar angeordnet. Um nun die Buchse 54 zu drehen, bzw. zu verschieben, sind unter anderem zwei Nockenplatten 60 vorgesehen, die wie aus Fig. 8 hervorgeht, über Schrauben 62 sich diametral gegenüberliegend mit der Buchse 54 schwenkbar verbunden sind und an ihrem frontseitigen Ende, wie es aus den Fig. 6 und 7 hervorgeht, über eine Stirnplatte 64 miteinander in Verbindung stehen. Beide Nockenplatten sind an ihrer einen Seite mit identisch gebogenen Nockenflächen 66 versehen, die gegen den Radialflansch 58 der drehfesten Buchse 52 anliegen. Ein Betätigungshebel 70 ist noch mit der oberen Nockenplatte 60 über zwei Schenkel 72 verbunden, während ein Ausleger 74 an der Stirnplatte 64 angreift. Dieser weist einen längeren oberen Schenkel 76 und einen kürzeren unteren Schenkel 78, wie es am besten aus Fig. 11 zu ersehen ist, auf, die einen derartigen Abstand aufweisen, daß sie einen unteren Lenker 14, wie es aus den Fig. 4 bis 6 hervorgeht, über- bzw. untergreifen können. Eine Spiralfeder, die einenends gegen den Ring 34 und anderenends gegen die axial verschiebbare Buchse 54 anliegt, ist noch auf der Rundstange 18 vorgesehen und wirkt somit derart, daß die Buchse 54 in Richtung auf die Buchse 52 gedrückt wird.

Um nun die Querstange 16 bzw. das Verriegelungsglied 26 mit dem geräteseitigen Anschlußstück 40 verbinden zu können, wird das Verriegelungsstück 26 zunächst in seine Aufnahmestellung verdreht, die in Fig. 4 dargestellt ist. Danach werden die unteren Lenker 14 so weit angesenkt, daß die Ausnehmung 28 etwa in gleicher Höhe mit der Hakenspitze des geräteseitigen Anschlußgliedes 40 zu liegen kommt, worauf der Ackerschlepper 10 zurückgesetzt wird, bis daß die Hakenspitze des geräteseitigen Anschlußstückes 40 durch die Ausnehmung 28 durchtritt und die Rundstange 18 gegen den Steg des Anschlußstückes anliegt. Hierbei ist daraufhinzuweisen, daß der Durchmesser der Rundstange etwa der Rundung der Hakenausnehmung entspricht, so daß das geräteseitige Anschlußglied die Rundstange 18 voll aufnimmt. Der Führungsschlitz 32 unterstützt dabei das Ausrichten des Anschlußstückes 40 auf die Ausnehmung 28, da er sich über dem mit der Deichsel 42 verbundenen Schenkel des Anschlußstückes befindet. Danach können die unteren Lenker 14 in eine für das angeschlossene Gerät entsprechende Transporthöhe verstellt werden und das Verriegelungsglied 26 wird in seine Verriegelungsstellung gedreht. Hierzu betätigt die Bedienungsperson den Betätigungshebel 70 zunächst derart, daß die Nockenplatten 60 auf der Buchse 54 so weit verschwenkt werden, daß der kürzere untere Schenkel 78 des mit den Nockenplatten verbundenen Auslegers 74 den unteren Lenker 14 nicht mehr untergreift. Da sich bei dieser Betätigung die Nockenflächen 66 gegen den Radialflansch 58 abstützen, erfolgt bereits eine axiale Verschiebung der Buchse 54 in Richtung auf den Ring 34, die aber derart ist, daß die Buchse 54 mit ihren Zähnen noch in die entsprechenden Aussparungen an der Buchse 52 eingreift, d.h. beide Buchsen sind noch miteinander verrastet. Danach hebt die Bedienungsperson den Betätigungshebel 70 an, wodurch die Feststellvorrichtung 50 und somit auch die Querstange 16 im Uhrzeigerdrehsinn, wie es in Fig. 4 durch den Pfeil angedeutet ist, verdreht werden. Die Drehung ist nach 90° beendet, wenn das Verriegelungsglied 26 seine in Fig. 5 dargestellte Verriegelungsstellung einnimmt, in der das Verriegelungsstück 26 von der Querstange 16 nach hinten weist. In dieser Stellung ist das geräteseitige Anschlußstück 40 gesichert und kann nicht mehr von der Querstange 18 gelöst werden. Die Ausnehmung 28 ist dabei derart ausgebildet, daß sie die Basis des geräteseitigen Anschlußstückes 40 voll aufnimmt, wobei bis auf ein gewisses Spiel jegliche Bewegung des Anschlußstückes in der Ausnehmung 28 verhindert ist und das angeschlossene Gerät sowohl gezogen als auch nach rückwärts geschoben werden kann. Um nun das Verriegelungsglied in dieser Position sichern zu können, wird der Betätigungshebel 70 weiter um die Schrauben 62 verschwenkt, wobei sich die Buchsen 52 und 54 vollständig voneinander lösen, d.h. nicht mehr miteinander verzahnt sind. Danach kann der Betätigungshebel 70 mit den Nockenplatten 60, dem Ausleger 74 und der Buchse 54 wieder entgegen dem Uhrzeigerdrehsinn, wie es in Fig. 5 durch den Pfeil angedeutet ist, um 90° um die Achse der Querstange 16 zurückgeschwenkt werden, wobei die Querstange 16 das Verriegelungsglied 26 und die Buchse 52 in ihrer in Fig. 5 dargestellten Position verbleiben. Beim Zurückschwenken nehmen der Betätigungshebel 70 und die Nockenplatten 60 die in Fig. 7 dargestellte Stellung ein. Sobald der Betätigungshebel 70 um 90° zurückgeschwenkt wurde, braucht er nur losgelassen zu werden, woraufhin die Feder 80 die Buchse 54 wiederum auf die Buchse 52 hin verschiebt, und zwar soweit, bis beide miteinander verrastet sind, wobei die Nockenplatten 60 und somit auch der Ausleger 74 um die Achsen der Schrauben 62 verschwenken, bis daß die Schenkel 76 und 78 den unteren Lenker über- bzw. untergreifen, wodurch die Anschlußvorrichtung wieder gesichert ist. Um das Anschlußstück 40 von der Querstange 16 bzw. von dem Verriegelungsglied 76 wieder lösen zu können, wird der vorstehend beschriebene Vorgang in umgekehrter Reihenfolge durchgeführt.

Die erfindungsgemäße Anhängevorrichtung ist nicht auf die Anwendung bei Ackerschlepper und Geräten beschränkt, sie kann gleichermaßen zwischen beliebigen ziehenden und gezogenen Teilen, beispielsweise Eisenbahnzügen, Straßenbahnwagen etc. vorgesehen werden.

**0228627**

Patentansprüche

_____

1.  Anhängevorrichtung zum Verbinden eines hakenförmig
    ausgebildeten Anschlußgliedes (40) eines Gerätes
    mit einer an einem ziehenden Fahrzeug vorgesehenen
    Querstange (16), wobei das Anschlußglied (40) über
    ein am ziehenden Fahrzeug angeordnetes Verriegelungsglied (26) sicherbar ist, dadurch gekennzeichnet, daß das Verriegelungsglied (26) an der Querstange (16) angeordnet ist, zusammen mit der Querstange (16) eine Ausnehmung (28) zur Aufnahme des
    Anschlußgliedes (40) bildet und aus einer Aufnahmestellung in eine Verriegelungsstellung drehbar
    ist.

2.  Anhängevorrichtung nach Anspruch 1, dadurch
    gekennzeichnet, daß das Verriegelungsglied (26)
    mit der Querstange (16) fest verbunden und die
    Querstange (16) um ihre Längsachse drehbar gelagert ist.

3.  Anhängevorrichtung nach Anspruch 1, dadurch gekennzeichnet, daß das hakenförmige Anschlußglied
    (40) derart angeordnet ist, daß seine Hakenausnehmung nach vorne offen ist.

4.  Anhängevorrichtung nach Anspruch 2, dadurch gekennzeichnet, daß die Querstange (16) als Rundstange (18) ausgebildet ist, die in den rückwärtigen Enden von am ziehenden Fahrzeug vorgesehenen unteren Lenkern (14) drehbar gelagert ist.

5. Anhängevorrichtung nach einem oder mehreren der vorherigen Ansprüche, wobei das Anschlußglied (40) etwa U- oder C-förmig ausgebildet und ein Schenkel mit einer Zugstange (42) fest verbunden ist, der mit dem anderen freien Schenkel über ein Stegteil in Verbindung steht, dadurch gekennzeichnet, daß die von Querstange (16) und Verriegelungsglied (26) gebildete Ausnehmung (28) derart ausgebildet ist, daß in der Aufnahmestellung der freie Schenkel des Anschlußgliedes (40) durch die Ausnehmung (28) führbar und daß in der Verriegelungsstellung der Stegteil des Anschlußgliedes (40) von Verriegelungsglied (26) und Querstange (16) umfaßt ist.

6. Anhängevorrichtung nach Anspruch 5, dadurch gekennzeichnet, daß das Verriegelungsglied (26) halbkreisförmig und im Querschnitt kreis- oder etwa kreisförmig ausgebildet ist.

7. Anhängevorrichtung nach einem oder mehreren der vorherigen Ansprüche, dadurch gekennzeichnet, daß das Verriegelungsglied (26) bzw. die Querstange (16) in der Verriegelungsstellung über eine Feststellvorrichtung (50) sicherbar ist.

8. Anhängevorrichtung nach Anspruch 7, dadurch gekennzeichnet, daß die Feststellvorrichtung (50) eine Buchse (54) aufweist, die auf der Rundstange (18) drehbar und axial verschiebbar und in der Verriegelungstellung des Verriegelungsgliedes (26) gegen Drehen auf der Rundstange (18) und mit der Rundstange feststellbar ist.

0228627

9.  Anhängevorrichtung nach Anspruch 8, dadurch gekennzeichnet, daß auf der Rundstange (18) eine weitere Buchse (52) drehfest angeordnet ist, die mit der auf der Rundstange (18) verschiebbar angeordneten Buchse (54) über Zähne in Eingriff bringbar ist, wobei an der verschiebbaren Buchse (54) eine Nockenplatte (60) mit einer Nockenfläche (66) angelenkt ist, die gegen einen Radialflansch (58) an der Rundstange (18) anliegt und über die die Buchsen (52, 54) gegen die Wirkung einer Feder (80) außer Eingriff bringbar sind.

10. Anhängevorrichtung nach Anspruch 9, dadurch gekennzeichnet, daß die Nockenplatte (60) einen Ausleger (74) aufweist, der mit einem unteren Lenker (14) derart zur Anlage bringbar ist, daß die verschiebbare Buchse (54) gegen Drehen gesichert ist.

11. Anhängevorrichtung nach einem oder mehreren der vorherigen Ansprüche, dadurch gekennzeichnet, daß die Nockenplatte (60) mit einem Betätigungshebel (70) versehen ist und der Ausleger (74) einen oberen und einen unteren Schenkel (76, 80) aufweist, die den unteren Lenker (14) über- bzw. untergreifen.

0228627

1/5

FIG. 1

FIG. 6

FIG. 7

**FIG. 2**

26

28

36  34

22

20  22  18  32  30  30  20

16

**FIG. 3**

40

0228627

315

**FIG. 4**

**FIG. 5**

0228627

FIG. 8

FIG. 9

FIG. 10

0228627

5/5

FIG. II

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | FR-A-1 549 610 (CATERPILLAR TRACTOR) * Seite 1, rechte Spalte, Zeile 24 - Seite 2, linke Spalte, Zeile 2; Seite 2, linke Spalte, Absatz 2; Figuren 1-4 * | 1,2,7 | B 60 D 1/04 |
| X,D | US-A-3 524 660 (E. KEW) * Insgesamt * | 1 | |
| A | US-A-4 368 899 (K.S.U.R.F.) * Insgesamt * | 1 | |
| A | US-A-2 970 852 (H. DOLL) * Figuren 1-6 * | 8,9 | |

RECHERCHIERTE SACHGEBIETE (Int. Cl.4)

B 60 D 1
B 62 D 49
A 01 B 59

Der vorliegende Recherchenbericht wurde für alle Patentansprüche erstellt.

| Recherchenort | Abschlußdatum der Recherche | Prüfer |
|---|---|---|
| DEN HAAG | 31-03-1987 | LINTZ C.H. |